# EUROPEAN PATENT SPECIFICATION

(11) **EP 3 967 634 B1**
(45) Date of publication and mention of the grant of the patent: **23.04.2025**
(21) Application number: 20875106.5
(22) Date of filing: 14.05.2020
(51) Int. Cl.: B65G 51/04, B65G 51/14, B65G 51/28, B65G 51/16

(54) **SELECTIVE TRANSFER DEVICE AND METHOD**
VORRICHTUNG UND VERFAHREN ZUM SELEKTIVEN TRANSFER
DISPOSITIF ET PROCÉDÉ DE TRANSFERT SÉLECTIF

(30) Priority: 08.10.2019 KR 20190124408
(43) Date of publication of application: 16.03.2022
(73) Proprietor: Pazkorea Co., Ltd., Hanam-si, Gyeonggi-do 12918 (KR)
(72) Inventor: ROH, Dae Hyun, Namyangju-si Gyeonggi-do 12161 (KR)
(74) Representative: Seyer & Nobbe Patentanwälte PartmbB
(86) International application number: PCT/KR2020/006318
(87) International publication number: WO 2021/071044

(56) References cited:
- GB-A- 990 443
- JP-A- 2002 106 782
- JP-B2- H0 718 885
- KR-B1- 101 060 729
- KR-B1- 101 815 041
- US-B1- 6 319 469
- US-B2- 7 347 617

## Description

### [Technical Field]

The invention (also interchangeably called inventive concept(s) in the following disclosure) relates to a selective transfer device and a transfer method for a blood sample, and more particularly, to a selective transfer device and a transfer method which transfers the blood sample gathered from respective spots to the predetermined place without separately taking to improve process efficiency even if blood gathering is carried out at a plurality of spots, by including a transfer part transferring a transferred object such as blood sample, a transfer inlet and a serial inlet supplying the transferred object to the transfer part, an outlet ejecting the transferred object which is supplied, a gas pressure supplier supplying air to the transfer part, and including a first moving path, a second moving path, an ejecting path, and a first shutter and a second shutter respectively disposed in the second moving path and the ejecting path to regulate influx of the air and motion of the transferred object.

### [Background Art]

Generally, the blood sample is a vessel which is containing blood gathering at a hospital.

Since a great quantity of the blood samples are produced simultaneously, a variety of transfer devices have been used to transfer the blood samples.

The transfer devices should be located each spot and take the blood samples separately if blood gatherings are carried out a plurality of the spots because the aforementioned conventional transfer device is singly used to transfer the blood samples. This may cause a problem reducing process efficiency.

The transfer device for the blood sample is widely known, and particularly, is disclosed in the prior art as followings, therefore detailed description and drawings will be omitted.

GB 990 443 A discloses a selective transfer device, comprising: a transfer part transferring a transfer object such as a carrier;a transfer inlet and a serial inlet supplying the transfer object to the transfer part; an outlet ejecting the supplied transfer object; and an air pressure supplier supplying air to the transfer part,a first moving path, a second moving path and an ejecting path formed on a thickness surface of the transfer body along a direction of the transfer object moving; a first shutter and a second shutter formed in the second moving path and the ejecting path to regulate inflow of air and moving of the transfer object,wherein the first moving path and the second moving path is disposed apart from each other, and joined each other to form the ejecting path, and wherein the transfer inlet is in communication with the first moving path, the serial inlet is in communication with the second moving path, the transfer object is selectively inserted in the first moving path and the second moving path and ejected through the ejecting path to the outside.

### [Technical Problems to be Solved]

The main goal of the invention is to provide a selective transfer device and a transfer method capable of transferring blood samples gathered from respective spots to the predetermined place without separately taking to improve process efficiency even if blood gathering is carried out at a plurality of regions, by including a transfer part transferring a transferred object such as blood sample, a transfer inlet and a serial inlet supplying the transferred object to the transfer part, an outlet ejecting the transferred object which is supplied, a gas pressure supplier supplying air to the transfer part, and including a first moving path, a second moving path, an ejecting path, and a first shutter and a second shutter respectively disposed in the second moving path and the ejecting path to regulate influx of the air and motion of the transferred object.

### [Technical Solutions]

The invention provides a selective transfer device as defined in claim 1 and including a transfer part 100 transferring a transferred object S, a transfer inlet 350 and a serial inlet 400 supplying the transferred object S to the transfer part 100, an outlet 600 ejecting the transferred object S previously supplied, a gas pressure supplier 200 supplying air to the transfer part 100. The transfer part 100 may include a transfer body 110 having plate shape with predetermined thickness, a first moving path 120, a second moving path 130 and an ejecting path 140 formed on a thickness surface of the transfer body 110 in a direction of the transferred object S moving, and a first shutter 150 and a second shutter 160 respectively disposed in the second moving path 130 and the ejecting path 140 to regulate influx of the air and motion of the transferred object S. The first moving path 120 and the second moving path 130 may be disposed apart from each other, gradually closed along the direction of the transferred object S moving, and joining each other to form the ejecting path 140. The transfer inlet 350 may be communicated with the first moving path 120, and the serial inlet 400 may be communicated with the second moving path 130. And the transferred object S may be selectively inserted into the first moving path 120 or the second moving path 30, and ejected through the ejecting path 140.

In an embodiment, the first shutter 150 may include a first blocking plate 151 of plate shape which is disposed in the second moving path 130 to contact with air flowing in the second moving path 130, and a pivot pin 152 which is disposed at a lower portion of the first blocking plate 151 and rotating with being inserted in a side of the first moving path 130 , and the second shutter 160 may include a second blocking plate 161 of plate shape which is disposed in the ejecting path 140 to contact with air flowing in the ejecting path 140 and a pivot pin 162 which is disposed a lower portion of the second blocking plate 161 and rotating with being inserted in a side of the ejecting path 140.

According to the invention, the air pressure supplier 200 may include a first air pressure supplier 210 injecting air into the first moving path 120, a second air pressure supplier 220 injecting air into the second moving path 130 and a third air pressure supplier 230 injecting air into the ejecting path 140. The second air pressure supplier 220 may be installed at a downstream side of the direction of the transferred object S moving from the first shutter 150 which is disposed in the second moving path 130, and the third air pressure supplier 230 may be installed at a downstream side of the direction of the transferred object S moving from the second shutter 160 which disposed in the ejecting path 140. A third air injecting hole 119B and a second air injecting hole 119A may be disposed on a bottom surface of the transfer body 110 which are connected with the third air pressure supplier 230 and the second air pressure supplier 220 to communicate with the ejecting path 140 and the second moving path 160, respectively. The second blocking plate 161 of the second shutter 160 may be disposed obliquely in the direction of the transferred object S moving on the third air injecting hole 119B such that the second blocking plate 161 is turned by the air injected through the third air injecting hole 119B to open or close the ejecting path 140. The first blocking plate 151 of the first shutter 150 may be disposed obliquely in the direction of the transferred object S moving on the second air injecting hole 119A such that the first blocking plate 151 is turned by the air injected through the third air injecting hole 119A to open or close the second moving path 140.

In an embodiment, a first inserting hole 112 and a second inserting hole 113 may be disposed on a thickness side of the transfer body 110 to communicate with the first moving path 120 and the second moving path 130, respectively. An ejecting hole 115 may be disposed on the other thickness side of the transfer body 110 to communicate with the ejecting path 140. A first open portion 111 where the first moving path 120, the second moving path 130 and the ejecting path 140 are exposed and a cover portion 114 which is disposed around the open portion 111 to cover the first moving path 120, the second moving path 130 and the ejecting path 140 are formed on a side of a width direction of the transfer body 110. A cover 180 may be attached on the transfer body 110 to cover the side of the width direction of the transfer body 110 where the first exposed portion 111 is formed.

In an embodiment, the first moving path 120 may include a first open path 122 which is exposed by the first open portion 111 and a first inner path 121 which is covered by the cover portion 114 and connects the first open path 122 and the first inserting hole 112 of the transfer body 110. The second moving path 130 may include a second open path 132 which is exposed by the first open portion 111 and a second inner path 131 which is covered by the cover portion 114 and connects the second open path 132 and the second inserting hole 113 of the transfer body 110. The ejecting path 140 may include a third open path 132 which is exposed by the first open portion 111 and a third inner path 141 which is covered by the cover portion 114 and connects the third open path 132 and the ejecting hole 115 of the transfer body 110. A first operating space part 117 may be formed in a vacant space at a portion of the second inner path 131 of the second moving path 130 and appears on the outside. The first shutter 150 is installed to the first operating space part 117. A second operating space part 118 may be formed in a vacant space at a portion of the second inner path 131 of the second moving path 130 and appears on the outside. The second shutter 160 is installed to the first operating space part 117. The first operating space part 117 may have one side or both side in the direction of the transfer object S moving which is formed obliquely and exposing the second inner path 131, and the first operating space part 117 may have a bottom surface where the second air injecting hole 119A. A portion of width direction of the first operating space part 117 may have a pin holder 117A in which the pivot pin 152 of the first shutter 150 is inserted. The second operating space part 118 may have one side or both sides in the direction of the transfer object S moving which is formed obliquely and exposing the third inner path 141, and the second operating space part 118 may have a bottom surface where the third air injecting hole 119B. A portion of width direction of the second operating space part 118 may have a pin holder 118A in which the pivot pin 162 of the second shutter 160 is inserted.

The invention provides a transfer method as defined in claim 5 for selectively transferring a transfer object S using a selective transfer device. The selective transfer device includes a transfer part 100 transferring a transferred object S, a transfer inlet 350 and a serial inlet 400 supplying the transferred object S to the transfer part 100, an outlet 600 ejecting the transferred object S previously supplied, a gas pressure supplier 200 supplying air to the transfer part 100. The transfer part 100 may include a transfer body 110 having a shape of plate with predetermined thickness, a first moving path 120, a second moving path 130 and an ejecting path 140 formed on a thickness surface of the transfer body 110 in a direction of the transferred object S moving, and a first shutter 150 and a second shutter 160 respectively disposed in the second moving path 130 and the ejecting path 140 to regulate influx of the air and motion of the transferred object S. The first moving path 120 and the second moving path 130 may be disposed apart from each other, gradually closed along the direction of the transferred object S moving and joining each other to form the ejecting path 140. The transfer inlet 350 may be communicated with the first moving path 120, and the serial inlet 400 may be communicated with the second moving path 130. And the transferred object S may be selectively inserted into the first moving path 120 or the second moving path 30 and ejected through the ejecting path 140. When the transfer object S is inserted through the transfer inlet 350 to the first moving path 120 and ejected through the ejecting path 140, the transfer method may include injecting air to the first moving path 120 through the first air pressure supplier 210 of the air pressure supplier 200 which is connected to the first moving path 120 while the first blocking plate 151 and the second blocking plate 161 of the first shutter 150 and the second shutter 160 are in contact with a bottom surface to open the second moving path 130 and the ejecting path 140, and injecting air through the third air pressure supplier 230 of the air pressure supplier 200 which is connected to the ejecting path 140, after the transfer object S was passed the second shutter 160, to raise the second blocking plate 161 such that the ejecting path 140 toward the first moving path 120 is closed and the opposite direction is opened to transfer the transfer object S to the outlet 600. When the transfer object S is inserted through the serial inlet 400 to the second moving path 120 and ejected through the ejecting path 140, the transfer method may include contacting the first blocking plate 151 and the second blocking plate 161 of the first shutter 150 and the second shutter 160 with the bottom surface to opened the second moving path 130 and the ejecting path 140, injecting air through the second air pressure supplier 220 of the air pressure supplier 200 which is connected to the second moving path 130 , after the transferred object S was passed the first shutter 150, to raise the first blocking plate 151 of the first shutter 150 such that the second moving path 130 toward the serial inlet 400 is closed and the opposite direction is opened to transfer the transfer object S to the ejecting path 140 , and injecting air in the ejecting path 140 through the third air pressure supplier 230 of the air pressure supplier 220 which is connected to the ejecting path 140, after the transfer object S was passed the second shutter 160, to raise the second blocking plate 161 of the second shutter 160 such that the ejecting path 140 toward the second moving path 130 of the ejecting path 140 is closed and the opposite direction is opened to transfer the transfer object S to the outlet 600 through the ejecting path 140.

In an embodiment, the transfer object S may be a blood sample, the transfer part may include a rear transfer 100-1 and a front transfer 100-2 which are disposed along a direction of the blood sample moving, the serial inlet 400 of the front transfer 100-2 may be use the outlet 600 of the rear transfer part 100-1 and the transfer inlet 350 of the front transfer part 1002 may insert the blood sample obtained from a blood gathering spot to the transfer part 100.

Embodiments of the inventive concepts will now be described more fully hereinafter with reference to the accompanying drawings.

The disclosure may, however, be embodied in different forms and should not be construed as being limited to the embodiments set forth herein and the invention is defined by the appended claims. Rather, these embodiments are provided so that this disclosure will be thorough and complete, and will fully convey the scope of the disclosure to those skilled in the art.

### [Advantageous Effects]

According to the present invention described above, there is an effect that the processing efficiency can be improved compared to the prior art.

### [Brief Description of Drawings]

FIG. 1 is an exploded perspective view illustrating a transfer part according to an embodiment of the inventive concepts.
FIG. 2 is a perspective view illustrating a transfer part according to an embodiment of the inventive concepts.
FIG. 3 is an exploded perspective view illustrating a transfer device according to an embodiment of the inventive concepts.
FIG. 4 is a perspective view illustrating a transfer part according to an embodiment of the inventive concepts.
FIGS. 5 through 7 are a partial sectional perspective views illustrating a transfer part according to an embodiment of the inventive concepts.
FIGS. 8 through 11 are schematic views illustrating a selective transfer method for a transfer object by a transfer part according to an embodiment of the inventive concepts.
FIG. 12 is schematic view illustrating a transfer method for a transfer object using a plurality of transfer parts according to an embodiment of the inventive concepts.
FIG. 13 is a schematic view illustrating a transfer device using a blood sample as a transfer object according to an embodiment of the inventive concepts.
FIG. 14 is a perspective view illustrating a transfer device according to an embodiment of the inventive concepts of which case is cut open.
FIG. 15 is a partial perspective view enlarging an elevation part and a perpendicular part of a transfer device for a blood sample according to an embodiment of the inventive concepts.
16 FIG. 17 is partial perspective views enlarging a field inlet and an elevation part of a transfer device for a blood sample according to an embodiment of the inventive concepts.
FIG. 18 is a perspective view enlarging a perpendicular part of a transfer device for a blood sample according to an embodiment of the inventive concepts.
FIG. 19 is a partial perspective view illustrating a conveyor and a transfer part inlet of a transfer device for a blood sample according to an embodiment of the inventive concepts.
FIG. 20 is a partial perspective view illustrating a step of transferring a blood sample between a perpendicular part and a conveyor of a transfer device for a blood sample according to an embodiment of the inventive concepts.
FIG. 21 is a perspective view a transfer part of a transfer device for a blood sample according to an embodiment of the inventive concepts.
FIG. 22 is a partial perspective view illustrating a transfer part inlet of a transfer device for a blood sample according to an embodiment of the inventive concepts.
FIGS. 23 and 24 are perspective views a transfer part of a transfer device for a blood sample according to an embodiment of the inventive concepts.
FIG. 25 is a perspective view illustrating a step of transferring a blood sample by a plurality of transfer devices for blood samples according to an embodiment of the inventive concepts.

### [Mode for Carrying Out the Invention]

Throughout the disclosure, like reference numerals refer to like parts throughout the various figures and embodiments of the disclosure.

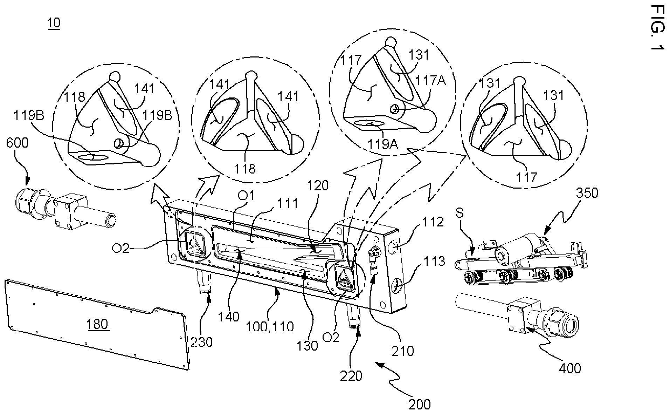

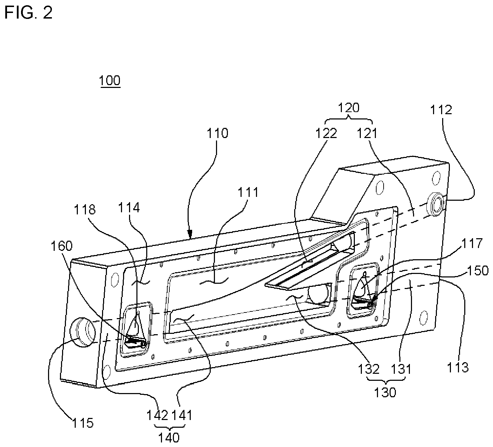

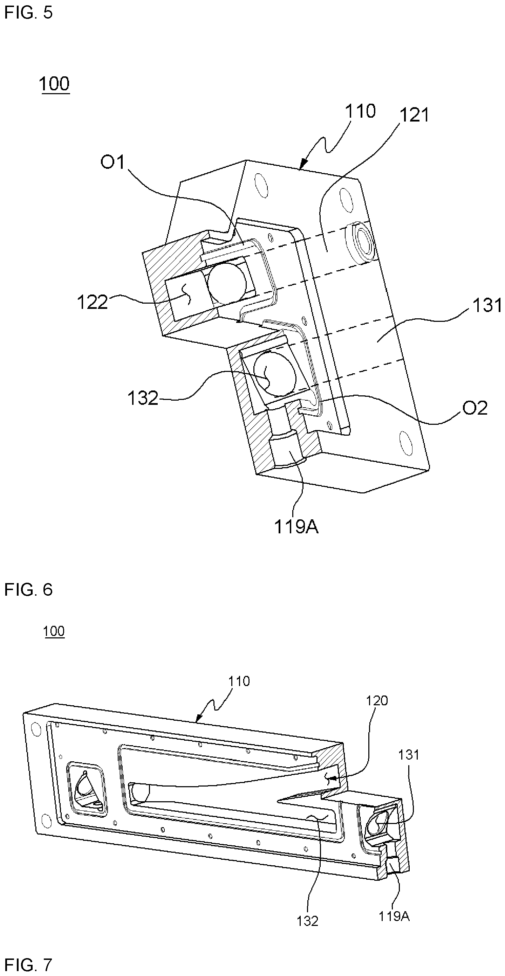

Referring to FIGS. 1 through 7, a transfer device 10 according to an embodiment of the inventive concepts may include a transfer part 100 transferring a transfer object S such as a blood sample, a transfer inlet 350 and a serial inlet 400 supplying the transfer object S to the transfer part 100, an outlet ejecting the supplied transfer object S, and an air pressure supplier 200 supplying air to the transfer part 100.

The transfer part 100 may include a transfer part 100 of plane shape having a predetermined thickness, a first moving path 120, a second moving path 120 and an ejecting path 140 formed on a thickness surface of the transfer body 110 along a direction of the transfer object S moving, a first shutter 150 and a second shutter 160 formed in the second moving path 130 and the ejecting path 140 to regulate inflow of air and moving of the transfer object S.

The first moving path 120 and the second moving path 130 may be disposed apart from each other, gradually closed along the direction of the transferred object S moving, and joined each other to form the ejecting path 140. If the direction of the transfer object S moving is from the right side to the left side of drawings, the first moving path 120 and the second moving path 130 is formed from the right side to the left side of the drawings. The first moving path 120 and the second moving path 130 may be disposed vertically apart from each other, gradually closed along the direction of the transferred object moving, i.e., the direction from right to left on the drawings, and joined each other to form the ejecting path 140.

The transfer inlet 350 may be communicated with the first moving path 120, and the serial inlet 400 may be communicated with the second moving path 130. The blood sample gathered in a blood gathering field, i.e., the transfer object may be input to the transfer part 100 through transfer inlet 350, the transfer object from a rear transfer part 100 may be input to the transfer part through the serial inlet 400 when a plurality of transfer parts is prepared.

As described above, the transfer object S may be selectively inserted to the first moving path 120 or the second moving path 130 and ejected through the ejecting path 140. That is to say, the transfer object may be inserted through the transfer inlet 350 to the first moving path 120 or through the serial inlet 400 to the second moving path 130 such that the transfer object is selectively inserted to the first moving path 120 or the second moving path 130.

Meanwhile, a first shutter 150 may be installed in the second moving path 130 to open or close the second moving path 130, and a second shutter 160 may be installed in the ejecting path 140 to open or close the ejecting path 140.

The first shutter 150 may include a first blocking plate 151 of plate shape which is in contact with air flowing in the second moving path 130, and a pivot pin 152 which is disposed at a bottom portion of the first shutter 151 and rotated with being installed in a side of the second moving path 130.

Similarly, the second shutter 160 may include a second blocking plate 161 which is installed in the ejecting path 140 and in contact with air flowing in the ejecting path 140 and has plate shape, and a pivot pin 162 which is disposed at a bottom portion of the second shutter 161 and rotated with being installed in a side of the ejecting path 140.

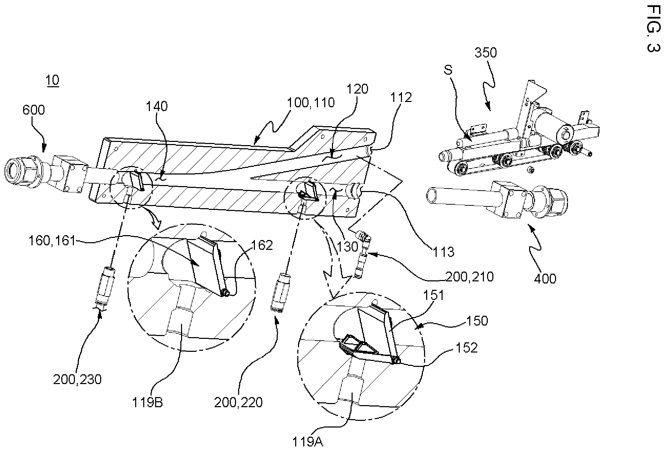

FIG. 3 simultaneously shows the first shutter 150 which is raised in a vertical direction and laid in a lateral direction, and the second shutter 160 is only shown in raised. The air flow in the second moving path 130 is interrupted by the first blocking plate 151 of the first shutter 150 when the first shutter 150 is raised, and the air flows is not interrupted by the first blocking plate 151 to flow free. This is the same as the second shutter 160.

Meanwhile, the pivot pin 152 or 162 may be disposed at the bottom of the first blocking plate 151 or the second blocking plate 162. The first blocking plate 152 or the second blocking plate 162 may be turned about the pivot pin 152 or 162 to be raised or laid. The pivot pin 152 or 162 may be turned with held in an inner side of the second moving path 130 or the ejecting path 140.

The transfer object S may move in the first moving path 120, the second moving path 130 and the ejecting path 140 by compressed air injected from an air pressure supplier 200. The air pressure supplier 200 may include a first air pressure supplier which injects air into the first moving path 120, a second air pressure supplier which injects air into the second moving path 130 and a third air pressure supplier which injects air into the third moving channel 230.

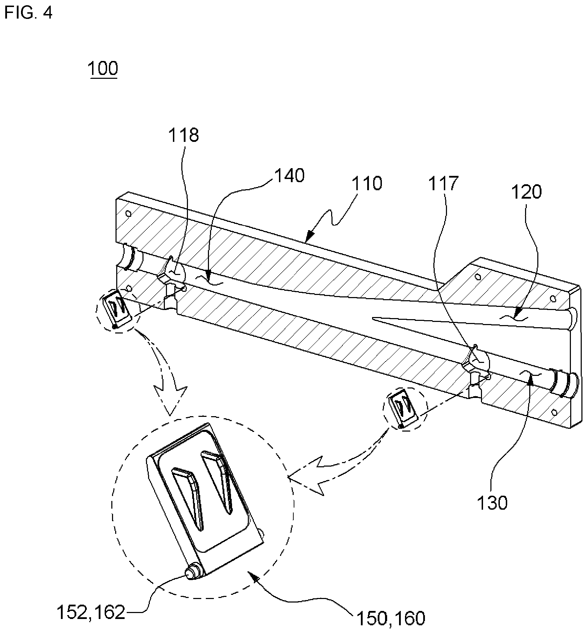

The second air pressure supplier 220 may be installed at a downstream side of the direction of the transfer object S moving from the first shutter 150 which is disposed in the second moving path 130, and the third air pressure supplier 230 may be installed at a downstream side of the direction of the transfer object S moving from the second shutter 160 which is disposed in the ejecting path. In other words, as shown in FIGS. 3 and 4, the second air pressure supplier 220 may be disposed at the downstream of the direction of the transfer object S moving from the first shutter 150, i.e., at the left side of the first shutter 150 in the drawings. The third air pressure supplier 230 may be disposed at the left side in the drawings, and this will be described.

A third air injecting hole 119B and a second air injecting hole 119A which are respectively connected to the third air pressure supplier 230 and the second air pressure supplier 220 and respectively communicated with the ejecting path 140 and the second moving path 130 may be formed at bottom surface of the transfer body 110. The second blocking plate 161 of the second shutter 160 may be obliquely disposed in the direction of the transfer object S moving and disposed on the third air injecting hole 119B, and the second blocking plate 161 is turned by air injected through the third air injecting hole 119B to open or close the ejecting path 140, the first blocking plate 151 of the first shutter 150 may be obliquely disposed in the direction of the transfer object S moving and disposed on the second air injecting hole 119A, and the first blocking plate 151 is turned by air injected through the third air injecting hole 119A to open or close the second moving path 130.

The second air injecting hole 119A may be communicated with and the second air pressure supplier 220. Compressed air supplied from the second air pressure supplier 220 may be injected through the second air injecting hole 119A into the second moving path 130. The second air pressure supplier 220 may be disposed downstream of the direction of the transferred object moving from the first blocking plate 151, i.e., at a left side in the drawing, the pivot pin 152 disposed on the first blocking plate 151 may be disposed at the right side of the second air pressure supplier 220 (i.e., upstream of the direction of the transfer object moving). The first blocking plate 151 of the first shutter 150 may be obliquely disposed in the moving direction of the transfer object S on the second air injecting hole 119A such that the first blocking plate 151 is turned by air injected from the second air injecting hole 119A to open or close the second moving path 130. When compressed air is supplied through the second air injecting hole 119A, the first blocking plate 151 is turned up by injected air to close the second moving path 120. If compressed air is not supplied through the second air injecting hole 119A, the first blocking plate 151 is returned down by weight to open the second moving path 120.

Similarly, the second blocking plate 161 of the second shutter 150 may be obliquely disposed in the moving direction of the transfer object S on the third air injecting hole 119B such that the second blocking plate 161 is turned by air injected from the third air injecting hole 119B to open or close the ejecting path 140.

Meanwhile, a first inserting hole 112 and a second inserting hole 113 may be formed on a side of a thickness surface of the transfer body 110 to communicate with the first moving path 120 and the second moving path 130, and an ejecting hole 115 may be formed on another side of the thickness surface of the transfer body 110 to communicate with the ejecting path 140. The transfer inlet 350 may be communicated with the first inserting hole 112 and the serial inlet 400 may be communicated with the second inserting hole 113.

A first open portion 111 where a portion of the first moving path 120, a second moving path 130 and the ejecting path 140 are exposed and a cover portion 114 around the first open portion 111 where the first moving path 120, the second moving path 130 and the ejecting path 140 are covered are formed on a side of the width surface of the transfer body 110. A cover 180 may be attached on the transfer body 110 to cover the width surface of the transfer body 110 where the first open portion 111 is formed.

In other words, as shown in drawings, a first open portion 111 is formed on a side surface of width direction of the transfer body 110(i.e., the front side in the drawing) to expose a portion of the first moving path 120, the second moving path 130 and the ejecting path 140, and the cover portion 114 is formed around the first open portion 111 to cover the rest of the first moving path 120, the second moving path 130 and the ejecting path 140. The first open portion 111 is formed in order to remove the transfer object easily which is jammed without moving in the first moving path 120, the second moving path 130 and the ejecting path 140 by some causes.

The cover 180 may cover the first open portion 111 and the cover portion 114 to prevent the compressed air from exhausting.

The first moving path 120 may include the first open path 122 which is exposed by the first open portion 111 of the transfer body 110 and a first inner path 121 which is covered by the cover portion 114 of the transfer body 110 and connects the first open path 122 and the first inserting hole 112 of the transfer body 110.

The second moving path 130 may include the second open path 132 which is exposed by the first open portion 111 of the transfer body 110 and a second inner path 131 which is covered by the cover portion 114 of the transfer body 110 and connects the second open path 132 and the second inserting hole 113 of the transfer body 110. The ejecting path 140 may include the third open path 142 which is exposed by the first open portion 111 of the transfer body 110 and a third inner path 141 which is covered by the cover portion 114 of the transfer body 110 and connects the third open path 142 and the ejecting hole 113 of the transfer body 110.

A portion of the second inner path 131 of the second moving path 130 may be formed in a vacant space to form a first operating space part 117 exposed to the outside where the first shutter 150 is installed, and a portion of the third inner path 141 of the ejecting path 140 may be formed in a vacant space to form a second operating space part 118 exposed to the outside where the second shutter 160 is installed.

A side or both sides of the first operating part 117 in the direction of the transfer object S moving may be formed obliquely and open the second inner path 131. And, a second air injecting hole 119A may be formed on the bottom surface of the first operating part 117. A pin holder 117A in which the pivot pin 152 of the first shutter 150 is inserted may be formed a portion of width direction of the first operating space part 117.

As shown in FIG. 1, both sides of the first operating space part 117 in the moving direction (i.e., from left to right direction in the drawing) may be formed obliquely and open the second inner path 131. As described above, the first operating space part 117 may be exposed to the outside from the transfer body 110 such that the first shutter 150 can be installed to the first operating space part, easily. The pivot pin 152 of the first shutter 150 is inserted in the pin holder 117A such that the first blocking plate 151 of the first shutter 150 can be turned about on the pivot pin 152 to open or close the second moving path.

A side or both sides of the second operating part 118 in the direction of the transfer object S moving may be formed obliquely and open the third inner path 141. A third air injecting hole 119B may be formed on the bottom surface. A pin holder 118A in which the pivot pin 162 of the second shutter 160 is inserted may be formed a portion of a width direction of the second operating space part 118.

Meanwhile, a sealing 01 may be installed around the first open portion 111 to prevent air from leaking, a sealing 02 may be installed around the first operating space part 117 and the second operating space part 118 to prevent air from leaking.

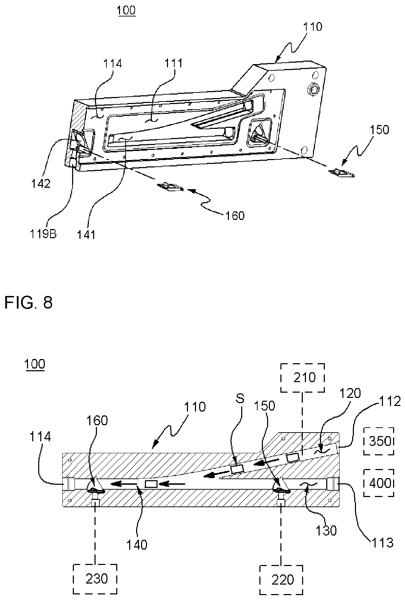

With referring to FIGS. 8 through 11 as well as FIGS. 1 through 7, a transfer method using the transfer device according to an embodiment of the inventive concepts will be described.

In first, the transfer method may use the selective transfer device including a transfer part 100 transferring a transferred object S, a transfer inlet 350 and a serial inlet 400 supplying the transferred object S to the transfer part 100, an outlet 600 ejecting the transferred object S previously supplied, a gas pressure supplier 200 supplying air to the transfer part 100, wherein the transfer part 100 may include a transfer body 110 having a shape of plate with predetermined thickness, a first moving path 120, a second moving path 130 and an ejecting path 140 formed on a thickness surface of the transfer body 110 in a direction of the transferred object S moving, and a first shutter 150 and a second shutter 160 respectively disposed in the second moving path 130 and the ejecting path 140 to regulate influx of the air and motion of the transferred object S, wherein the first moving path 120 and the second moving path 130 may be disposed apart from each other, gradually closed along the moving direction of the transferred object S and joined each other to form the ejecting path 140, wherein the transfer inlet 350 may be connected with the first moving path 120 and the serial inlet 400 may be connected with the second moving path 130, and wherein the transferred object S may be selectively input to the first moving path 120 or the second moving path 30 and output through the ejecting path 140.

A transfer method selectively transferring the transfer object using the transfer device 10 will be described hereinafter.

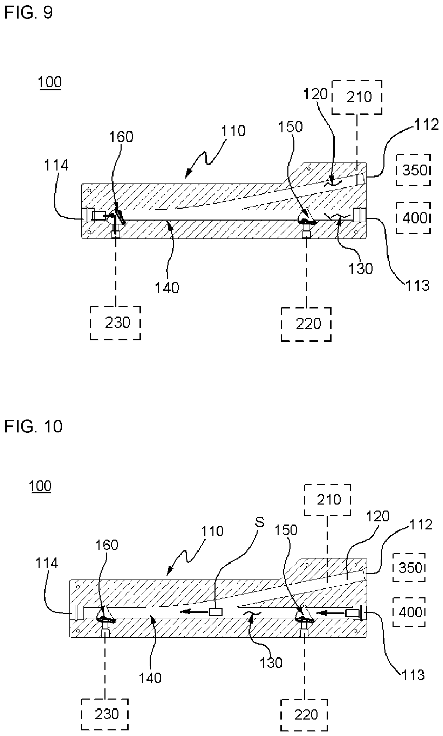

Referring to FIGS. 8 and 9, a case of ejecting the transfer object S through the ejecting path 140 after inserting the transfer object through the transfer inlet 350 in FIG. 1 into the first moving path 120 will be described. The transfer object S may be inserted in the first moving path 120. The transfer object S may be inserted into the first moving path 120 by propulsive force of the transfer inlet 350. Air is injected into the first moving path 120 through the first air pressure supplier 210 of FIG. 1 of the air pressure supplier 200 of FIG. 1 connected to the first moving path 120 to transfer the transfer object S to the ejecting path 140 while the first blocking plate 151 and the second blocking plate 161 of the first shutter 150 and the second shutter 160 are in contact with a floor to open the second moving path 130 and the ejecting path 140. After the transfer object S passed the second shutter 160, air is injected into the ejecting path 140 through the third air pressure supplier 230 of the air pressure supplier connected to the ejecting path 140 to raise the second blocking plate 161 of the second shutter 160 to close the ejecting path 140 in direction to the first moving path 120 (i.e., the right direction of the drawing) and open the opposite direction. Additional air pressure is supplied through the third air pressure supplier 230 because the transfer object may not be transferred over the ejecting path 140 by the air pressure supplied through the first air pressure supplier 210. In this time, the second shutter 160 is raised to close a direction to the first moving path 120 to permit the air pressure flowing only in a direction to the ejecting path 140 thereby achieving an efficient transfer. Using this method, the transfer object S is transferred to the outlet 600 of FIG. 1 through the ejecting path 140.

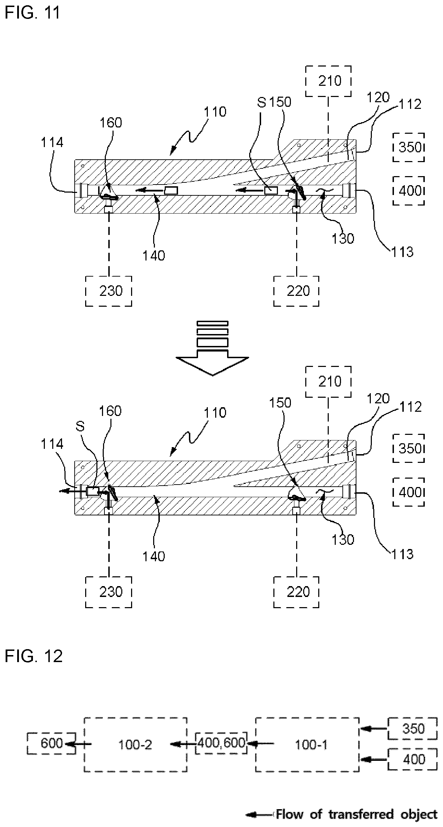

Referring to FIGS. 10 and 11, case of ejecting the transfer object S through the ejecting path 140 after inserting the transfer object through the serial inlet 400 in FIG. 1 into the second moving path 120 will be described. To begin with, the transfer object S is inserted to the second moving path 120 by propulsive force of the serial inlet 400. In this case, the first blocking plate 151 and the second blocking plate 161 of the first shutter 150 and the second shutter 160 are in contact with the floor to open the second moving path 130 and the ejecting path 140, air is injected through the second air pressure supplier 220 of the air pressure supplier 200 connected to the second moving path 120 to turn up the first blocking plate 151 of the first shutter 150 such that the second air pressure supplier 220 of a direction to the serial inlet 400 is closed and the opposite direction to transfer the transfer object S is opened to the ejecting path 160 after the transfer object S passed the first shutter 150.

After the transfer object S passed the second shutter 160, air is injected into the ejecting path 140 through the third air pressure supplier 230 of the air pressure supplier connected to the ejecting path 140 to turn up the second blocking plate 161 of the second shutter 160 such that the ejecting path 140 in direction to the second moving path 130 is closed and the opposite direction is opened to transfer the transfer object S through the ejecting path 140 to the outlet 600.

According to the inventive concepts, the transfer object can be transferred by selecting one of the first moving path 120 or the second moving path 130.

The transfer object S may be a blood sample, and the transfer object 100 may include a rear transfer part 100-1 and a front transfer part 100-2 which are disposed in a direction of the blood sample moving as shown in FIG. 12. The serial inlet 400 of the front transfer part 100-2 may use the outlet 600 of the rear transfer part 100-1, the blood sample gathered in a field may be inserted to the transfer part 100 through the transfer inlet 350 of the front transfer part 100-2.

According to the inventive concepts, blood samples gathered at a plurality of blood gather spots can be transferred to the predetermined place thereby achieving effective process.

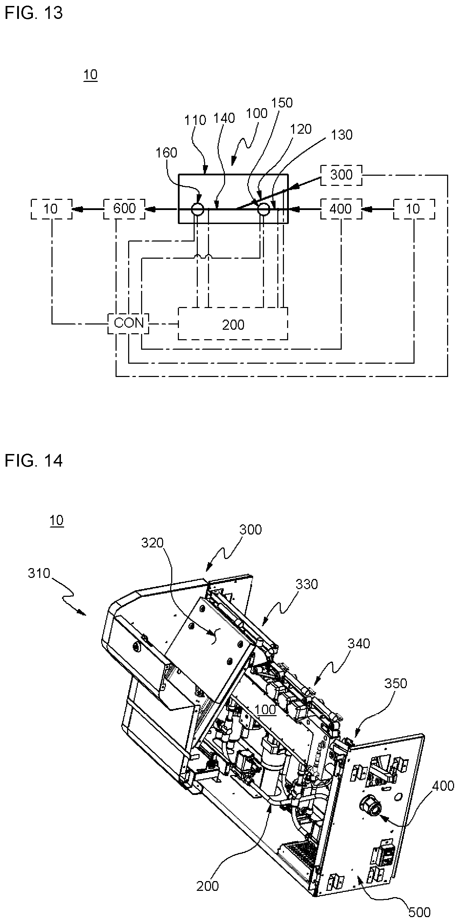

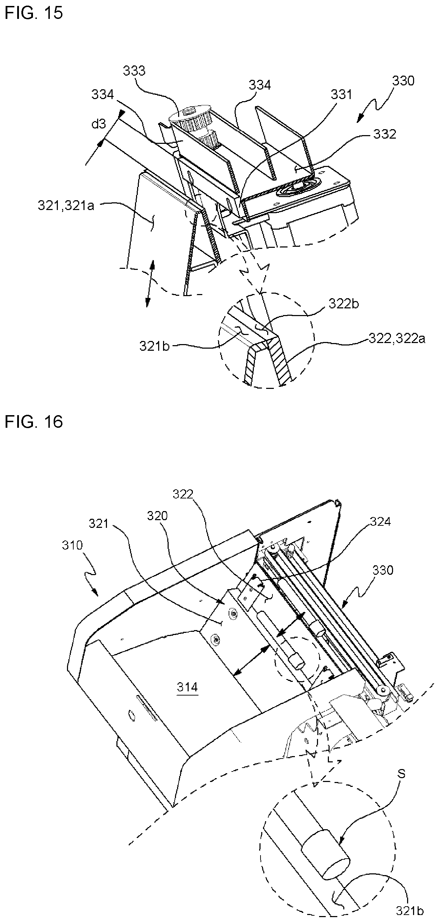

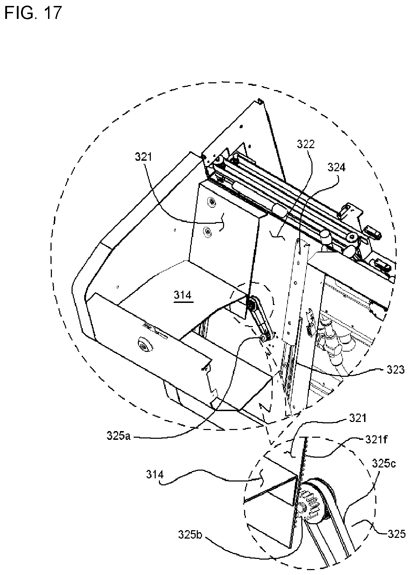

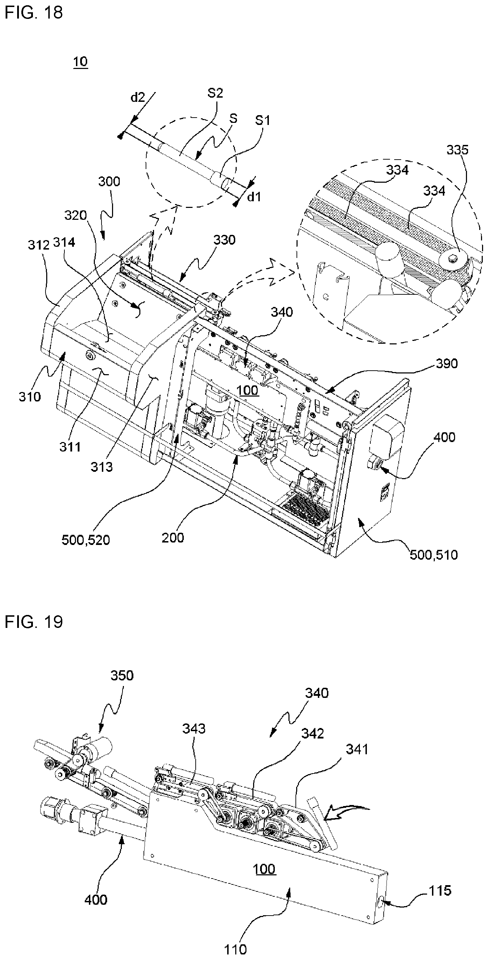

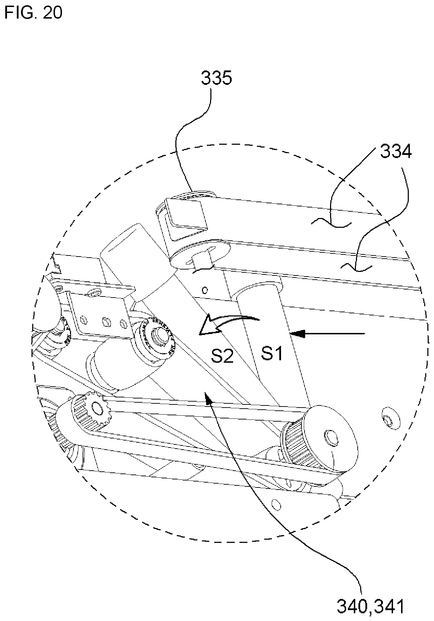

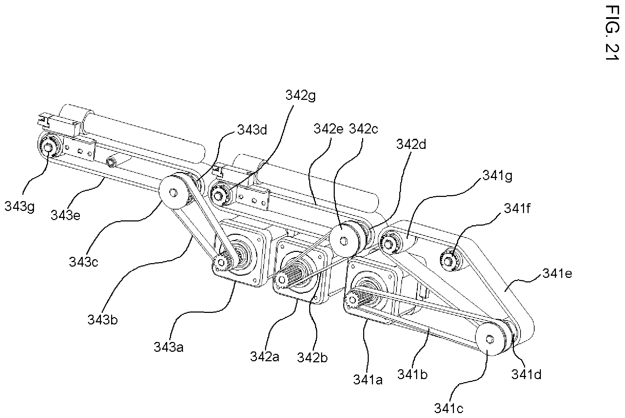

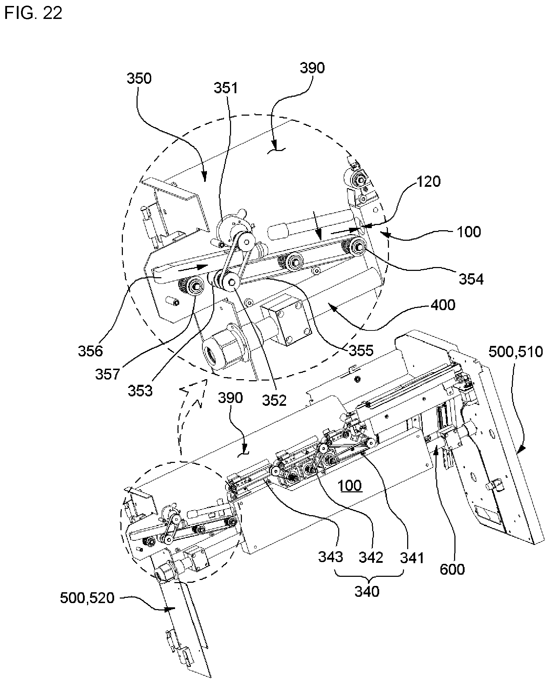

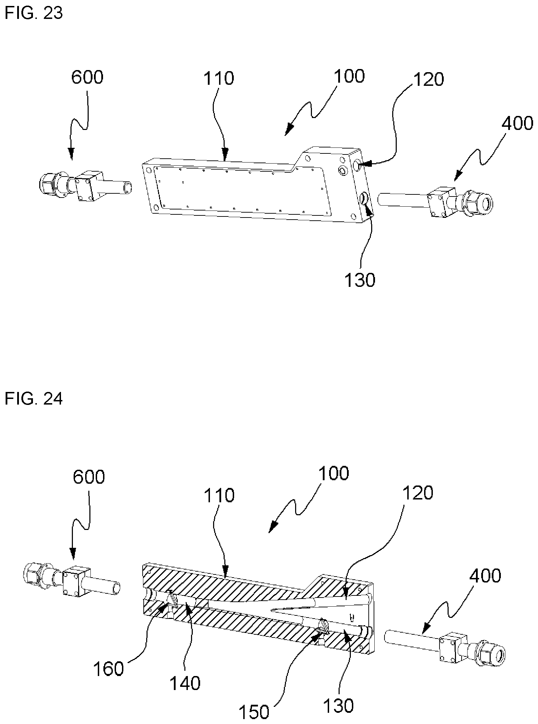

Referring to FIGS. 13 through 24, the transfer device and method for a blood sample using the transfer device according to inventive concepts will be described with a blood sample as a transfer object.

The transfer device 10 may include a case 500 with hollow, a transfer part 100 disposed in the case 500 to transfer the blood sample S, a field inlet 300 disposed at a side of the case 500 to transfer to the blood sample S gathered in a blood gathering spot to the transfer part 100, and an outlet 600 ejecting the blood sample S transferred in the transfer part 100 to the outside.

The blood sample S may be inserted through the field inlet 300, transferred by the transfer part 100 and ejected through the outlet 600 to the outside.

FIG. 14 shows the inside of the case 500 by opening a part of the case 500, any type capable of containing the transfer part 100 and the outlet 600 can be used as the case 500. The field inlet 300 may be disposed at a side of the case 500, i.e., at the left of the case 500 as shown in FIG. 14.

The blood sample S may be transferred by the transfer part 100, and the transfer part 100 may transfer the blood sample S using compressed air supplied by an air pressure supplier 200.

The control unit CON may control the transfer part 100, the air supplier 200, the field inlet 300 and the outlet 600. The control unit CON may be connected with the field inlet 300 and the air pressure supplier 200 to transfer the blood sample S to the transfer part 100 and control the air pressure supplier 200 to supply air to the transfer part 100 such that the blood sample is transferred to the outside.

The transfer device 10 for blood samples according to the inventive concepts may include a serial inlet 400 disposed at a side of the case 500 where a blood sample ejected from another transfer device 10 for blood samples is inserted. For example, if there are a plurality of spots gathering blood samples, the transfer devices 10 for blood samples are equipped at each spot and the plurality of the transfer devices 10 for blood samples may be connected. The blood sample may be transferred by the serial inlet 400 from another transfer device 10 for the blood sample. In other words, the transfer devices for blood samples according to the inventive concepts are equipped at a plurality of spots and connected to improve process efficiency.

The transfer part 100 for transferring the blood sample may include a transfer body 110 of plate shape, a first moving path 120, a second moving path 130 and an ejecting path 140 disposed in the transfer body 110, as shown in FIGS. 13, 23 and 24.

The first moving path 120 may be communicated with the field inlet 300, the second moving path 130 may be communicated with the serial inlet 400 and the ejecting path 140 may be communicated with the outlet 600. In other words, the blood sample gathered from the field inlet 300 may be inserted to the first moving path 120 and ejected through the ejecting path 140 and the outlet 600. The blood sample transferred from another transfer device 10 for the blood sample may be transferred through the serial inlet 400 and inserted through the second moving path 130 to the transfer part 100. Then, the blood sample may be ejected through the ejecting path 140 and the outlet 600.

In other words, a blood sample transferred from another transfer device 10 for blood samples equipped around as well as a blood sample gathered from the field inlet 300 may be transferred according to the inventive concepts.

The first moving path 120 and the second moving path 130 may be formed in branched off and joined each other at a point after running a predetermined distance in a moving direction of the blood sample to use one ejecting path 140.

A first shutter 150 may be disposed at a point of the second moving path 130 before joining with the first moving path 120, and the second shutter 160 may be disposed in the ejecting path 140. An air pressure supplier 200 may be connected to the first shutter 150, the second shutter 160, the first moving path 120 and the second moving path 130.

For example, when the blood sample is inserted through the field inlet 300 to the first moving path 120, compressed air may be injected to the first moving path 120 by the air pressure supplier 200 such that the blood sample is transferred through the ejecting path to the outside. If the blood sample is inserted through the second moving path 130, compressed air is supplied after opening the first shutter 150 by supplying compressed air such that the blood sample is transferred to the ejecting path 140. The second shutter 160 may be closed after passing the blood sample through the opened second shutter 160 and compressed air may be injected in the ejecting path 140 to transfer the blood sample to the outside.

The field inlet 300 may be disposed at a side of the case 500 as shown in FIGS. 13 through 22, and include a basket 310 simultaneously containing a plurality of blood samples S gathered in a blood gathering spot, an lifting unit 320 disposed on a side of the basket 310 and lifting the injected blood sample S, a support panel 390 of planer shape disposed in a longitudinal direction in the case 500, a transfer inlet 350 disposed on the support panel 390 to insert the blood sample S in the transfer part 100, a standing unit 330 receiving the blood sample S from the lifting unit 320 and standing the blood sample S, and a conveyor 340 transfer the blood sample S received from the standing unit 330 to the transfer inlet 350.

That is, in the first, the gathered blood samples may be inserted in the basket 310. The inserted blood samples may be lifted by the lifting unit 320 and inserted in the standing unit 330. The blood sample inserted in the standing unit 330 may be arranged in a vertical direction to stand up. The blood sample in this state may be transferred in a longitudinal direction of the case 500 through the conveyor 340 to the transfer inlet 350. The blood sample transferred to transfer inlet 350 may be finally inserted to the transfer part 100 to be ejected to the outside.

The basket 310 may include sidewalls 312 and 313 which is formed in a pair disposed on a side in a longitudinal direction of the case 500 and a bottom 314 which is disposed between the sidewalls 312, 313 and formed with slopes lowering toward the center of the case 500 in a width direction. When a plurality of blood sample S is inserted to the basket 310, the blood samples are lying down and arranged in a horizontal direction. A front wall 311 may be disposed between the sidewalls 312, 313.

The blood sample in this state may be lifted by the lifting unit 320. The lifting unit 320 may include a lifting panel 321 which is in contact with the bottom 314 and inclined away from the front wall 311 as it goes upward on the basis of the height direction of the case 500 and a fixed panel 322 which is disposed in a vertical direction and in contact with an inner side of the lifting panel 321. When the lifting panel 321 lifts up from a lower surface of the bottom 314, the blood sample S may be carried on an upper surface of the lifting panel 321 and lifted as shown in a drawing. We will describe the above in addition.

The lifting panel 321 may be lifted up and down by a driving unit 324, in order to ensure precise movement, the transfer device 10 may include a holding guide 323 which is disposed on the fixed panel 322 and a moving channel 324 which is disposed on a side of the fixed panel 322 of the lifting panel 321 and coupled with the holding guide 323 in a male-female manner.

The lifting panel 321 may include a lifting panel body 321a of planar shape and a lifting panel flat part 321b bent in a horizontal direction on the upper part of the lifting panel body 321a. The fixed panel 322 may include a fixed panel body 322a of planar shape and a fixed panel flat part 321b bent in a horizontal direction on the upper part of the fixed panel body 322a and in contact with the lifting panel flat part 321b.

That is to say, if the lifting panel 321 lifts up from a floor of the bottom 314, one of the blood samples stacked on the bottom 314 is carried on a flat part 321b of the lifting panel. If the lifting panel 321 lifts up further such that the height of the flat part 321b of the lifting panel 321 is higher than the height of the fixed panel 322, the blood sample S carried on the flat part 321b of the lifting panel flat part 321 moves to the fixed panel flat part 322b and be transferred to the standing unit 330.

The driving unit 324 for lifting up and down the lifting panel 321 may be disposed on the fixed panel 322, and include a driving gear 325a rotating in conjunction with a revolution generator, a driven gear 325b gear coupled with a side of the lifting panel 321 and a power transmission 325c connecting the driving gear 325a and the driven gear 325b.

The lifting panel 321 may include a tooth shaped part 321f formed on a side of the lifting panel body 321a toward the fixed panel 322 such that the driven gear 325b is coupled with the teeth shaped part 321f by gear engagement.

The revolution generator 322 using a widely known electric motor may be fixed on a bottom surface of the fixed panel 322. The driving gear 325a may be disposed on a top surface of the fixed panel 322 and rotating by the revolution generator. The driven gear 325b may rotating in conjunction with the driving gear 325b by the power transmission using an electric belt and so on. A tooth shaped part 321f may be formed on a side of the lifting panel 321 to link with the driven gear 325b. Thus, the lifting panel 321 may be lifted up and down according to rotation of the driven gear 325b.

As described above, in order to ensure precise movement, the transfer device 10 may include a holding guide 323 which is disposed on the fixed panel 322 and a moving panel 324 which is disposed on a side of the fixed panel 322 of the lifting panel 321 and coupled with the holding guide 323 in a male-female manner. That is, the moving channel 324 may lift up and down and the moving channel 324 moves on the fixed guide 323 if the lifting panel 321 lifts up and down, thereby achieving precise moving of the lifting panel 321.

The blood sample s lifted up by the lifting unit 320 may be transferred to the standing unit 330 to be stand up.

The standing unit 330 may include a vertical panel 332 disposed in a vertical direction spaced apart in a width direction of the case 500 at a distance from the fixed panel 322, a horizontal panel 331 disposed in a horizontal direction on a side of the vertical panel 332, the driving roller 333 disposed on the horizontal panel 331 and rotating by the power generator, a driven roller 335 spaced apart from the driving roller in a longitudinal direction of the case 500, and a belt part 334 connecting the driving roller 333 and the driven roller 335.

The distance d3 between the fixed panel 332 and the vertical panel 332 is shorter than the diameter d1 of the head of the blood sample, and the distance d3 between the fixed panel 322 and the vertical panel 332 may be longer than a diameter of a body S2 of the blood sample S. Thus, the blood sample S may be located at a space between the fixed panel 322 and the vertical panel 332 by the lifting unit 320, moving in contacted with the belt part 334, and the body S2 of the blood sample S may be moved down through the space between the fixed panel 322 and the vertical panel 332 such that the blood sample is stood up.

The blood sample s stood up by the lifting unit 330 may be transferred to the conveyor 340. The conveyor 340 may be disposed on the support panel 390 and include a first conveyor 341, a second conveyor 342 and a third conveyor 343 which are arranged in order from the standing unit 330 to receive the blood sample S.

The first conveyor 341 may include a first actuator 341a disposed on the support panel 390 to generate rotary power , an 11th driven roller 341c rotating by the first actuator 341a, a 12th driven roller 341d interlocking with the 11th driven roller 341c, a 13th driven roller 341g rotating by the 12th driven roller 341d, a 11th belt 341b connecting the first actuator 341a and the 11th driven roller 341c, and a 12th belt 341e connecting the 12th driven roller 341d and the 13th driven roller 341g.

The 13th driven roller 341g may be disposed above the 12 driven roller 341d in a height direction of the case 500, an idle roller 341f may be disposed in a horizontal direction of the case 500 from the 13th driven roller 341g such that the 12th belt between the idle roller 341f and the 12th driven roller 341d is declined and the 12th belt between the idle roller 341f and the 13th driven roller 341g is horizontal.

The blood sample S transferred in standing state from the standing unit 330 may be transferred with leaning on the 12th belt 341e between the idle roller 341f and the 12th driven roller 341d, transferred along a horizontal direction by the 12th belt 341e between the idle roller 341f and the 13th driven roller 341g, and transferred to the second conveyor 342 and the third conveyor 343, in order.

The second conveyor 342 may include a second actuator 342a disposed on the support panel 390 to generate rotary power , an 21th driven roller 341c rotating by the second actuator 342a, a 22th driven roller 342d interlocking with the 21th driven roller 341c, a 23th driven roller 342g rotating by the 22th driven roller 342d, a 21th belt 342b connecting the second actuator 342a and the 21th driven roller 341c, and a 22th belt 342e connecting the 22th driven roller 342d and the 23th driven roller 342g.

The third conveyor 343 may include a third actuator 343a disposed on the support panel 390 to generate rotary power , an 31th driven roller 343c rotating by the third actuator 343a, a 32th driven roller 343d interlocking with the 31th driven roller 343c, a 33th driven roller 343g rotating by the 32th driven roller 343d, a 31th belt 343b connecting the third actuator 343a and the 31th driven roller 343c, and a 32th belt 343e connecting the 32th driven roller 343d and the 33th driven roller 343g.

The 22th belt 342e and the 32th belt 343e may be disposed at the same height such that the blood samples S transferred from the first conveyor 341 are transferred to the transfer inlet 350, in order.

The transfer inlet 350 may receive the blood sample S from the conveyor 340 to transfer to the transfer part 100. The transfer inlet 350 may include a driving actuator 351 disposed on the support panel 390 to generate a rotary power, a first driven roller 352 disposed below the driving actuator 351 in the height direction of the case 500, a second driving roller 353 interlocking with the first driven roller 352, a third driven roller 354 disposed away from the second driven roller 353 toward the conveyor 340, a transfer belt 355 disposed between the second driven roller353 and the third driven roller 354, and a plunge 356 transferred on the transfer belt 355.

The transfer belt 355 may be formed obliquely in a predetermined angle such that the plunge 356 disposed on the transfer belt 355 hits the blood sample S dropped on the transfer belt 355 and the blood sample S is inserted to the first moving path 120 of the transfer part 100.

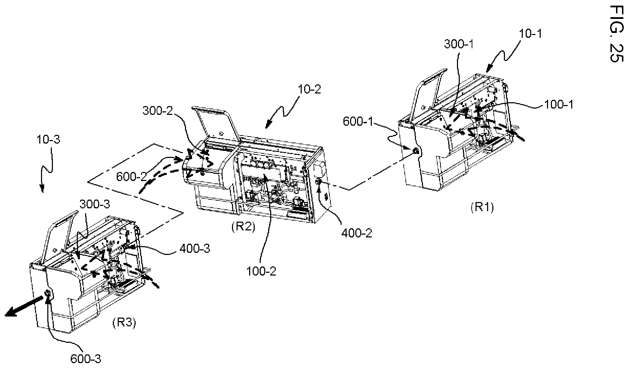

The inventive concept will be described with referring to FIG. 25.

FIG. 25 illustrates a plurality of transfer device for blood samples equipped on each blood gathering rooms. A first transfer device for blood sample 10-1 is equipped in a first blood gathering room R1, a second transfer device for blood sample 10-2 is equipped in a second blood gathering room R2, and a third transfer device for blood sample 10-3 is equipped in a third blood gathering room R3.

A blood sample gathered in the first blood gathering room R1 may be inserted to the transfer device for blood sample 10-1 through the field inlet 300-1. The blood sample inserted in the first transfer device for blood sample 10-1 may be inserted to the serial inlet 400-2 of the second transfer device for blood sample 10-2 through the outlet 600.

That is to say, the second transfer device for blood sample 10-2 may be equipped in the second blood gathering room R2 such that a blood sample in the second blood gathering room R2 is inserted through the field inlet 300-2, while the blood sample of the first blood gathering room R1 is transferred through the serial inlet 400-2.

The blood sample of the second blood gathering room R2 and the blood sample of the first blood gathering room R1 may be transferred to the third transfer device for blood sample 10-3 through a transfer part 100-2 and an outlet 600-2. The blood sample of the second blood gathering room R2 transferred to the second transfer device for blood sample 10-2 through the transfer part 100-2 and the field inlet 300-2 and the blood sample of the first blood gathering room R1 inserted in the second transfer device for blood sample 10-2 through the serial inlet 400-2 may be transferred to the third transfer device for blood sample, alternately.

Meanwhile, a blood sample may be transferred to a serial inlet 400-3 of the third transfer device for blood sample 10-3 through the outlet of the second transfer device for blood sample 10-2, this is the same as the above description thereby skipping explanation.

According to the inventive concepts, the process efficiency can be improved.

While various embodiments have been described above, it will be understood to those skilled in the art that the embodiments described are by way of example only. Accordingly, the disclosure described herein should not be limited based on the described embodiments and the invention is solely defined by the appended claims.

## Claims

1. A selective transfer device, comprising:
a transfer part (100) transferring a transfer object (S);
a transfer inlet (350) and a serial inlet (400) supplying the transfer object (S) to the transfer part (100);
an outlet ejecting the supplied transfer object (S); and
an air pressure supplier (200) supplying air to the transfer part (100),
wherein the transfer part 100 comprises a transfer body (110) of plate shape having a predetermined thickness; a first moving path (120), a second moving path (130) and an ejecting path (140) formed on a thickness surface of the transfer body (110) along a direction of the transfer object (S) moving; a first shutter (150) and a second shutter (160) formed in the second moving path (130) and the ejecting path (140) to regulate inflow of air and moving of the transfer object (S),
wherein the first moving path (120) and the second moving path (130) is disposed apart from each other, gradually closed along the direction of the transfer object (S) moving, and joined each other to form the ejecting path (140), and
wherein the transfer inlet (350) is in communication with the first moving path (120), the serial inlet (400) is communicate with the second moving path (130), the transfer object (S) is selectively inserted in the first moving path (120) and the second moving path (130) and ejected through the ejecting path (140) to the outside,
wherein the air pressure supplier (200) comprises a first air pressure supplier (210) injecting air into the first moving path (120), a second air pressure supplier (220) injecting air into the second moving path (130), and a third air pressure supplier (230) injecting air into the ejecting path (140),
wherein the second air pressure supplier (220) is installed at a downstream side in the direction of the transfer object (S) & moving from the first shutter (150) which is disposed in the second moving path (130),
wherein the third air pressure supplier (230) is installed at a side the downstream side in the direction of the transfer object (S) moving from the second shutter (160) which is disposed in the ejecting path (140),
wherein a third air injecting hole (119B) and a second air injecting hole (119A) is formed at bottom surface of the transfer body (110) to be respectively connected with the third air pressure supplier (230) and the second air pressure supplier (220) and respectively communicated with the ejecting path (140) and the second moving path (130),
wherein the second blocking plate (161) of the second shutter (160) is obliquely disposed in the moving direction of the transfer object (S) on the third air injecting hole (119B) to be turned by air injected from the third air injecting hole (119B) such that the ejecting path (140) is opened or closed, and
wherein the first blocking plate (151) of the first shutter (150) is obliquely disposed in the moving direction of the transfer object (S) on the second air injecting hole (119A) to be turned by air injected from the second air injecting hole (119A) such that the second moving path (130) is opened or closed..

2. The selective transfer device of claim 1, wherein the first shutter (150) comprises a first blocking plate (151) of plate shape in contact with air flowing in the second moving path (130), and a pivot pin (152) disposed at a bottom portion of the first blocking plate (151) and installed in a side of the second moving path (130), and
wherein the second shutter (160) comprises a second blocking plate (161) installed in the ejecting path (140) and having plate shape in contact with air flowing in the ejecting path (140), and a pivot pin (162) disposed at a bottom portion of the second blocking plate (161) and installed in a side of the ejecting path (140) to be turned.

3. The selective transfer device of claim 1, wherein a first inserting hole (112) and a second inserting hole (113) are formed at a side of a thickness surface of the transfer body (110) to be communicated with the first moving path (120) and the second moving path (130),
wherein an ejecting hole (115) is formed on the other side of the thickness surface of the transfer body (110) to be communicated with the ejecting path (140),
wherein a first open portion (111) are formed on a side of the width surface of the transfer body (110) to expose a portion of the first moving path (120), a second moving path (130) and the ejecting path (140), and a cover portion (114) is formed around the first open portion (111) to cover the first moving path (120), the second moving path (130) and the ejecting path (140), and
wherein a cover (180) is attached on the transfer body (110) to cover the width surface of the transfer body (110).

4. The selective transfer device of claim 3, wherein the first moving path (120) comprises the first open path (122) which is exposed by the first open portion (111) of the transfer body (110), and a first inner path (121) which is covered by the cover portion (114) of the transfer body (110) and connects the first inserting hole (112) of the transfer body (110) and the first open path (122),
wherein the second moving path (130) comprises a second open path (132) which is exposed by the first open portion (111) of the transfer body (110), and a second inner path (131) which is covered by the cover portion (114) of the transfer body (110) and the second inserting hole (113) of the transfer body (110) and connects the second open path (132),
wherein the ejecting path (140) comprises the third open path (142) which is exposed by the first open portion (111) of the transfer body (110), and a third inner path (141) which is covered by the cover portion (114) of the transfer body (110) and connects the ejecting hole (115) of the transfer body (110) and the third open path (142),
wherein a portion of the second inner path (131) of the second moving path (130) is formed in a vacant space to form a first operating space part (117) where a first shutter (150) is installed, the first operating space part (117) is exposed to the outside of the transfer body (110),
wherein a portion of the third inner path (141) of the ejecting path (140) is formed in a vacant space to form a second operating space part (118) where a first shutter (160) is installed, the second operating space part (118) is exposed to the outside of the transfer body
wherein a side or both sides of the first operating part (117) in the moving direction of the transfer object (S) is formed obliquely to expose the second inner path (131), a second air injecting hole (119A) is formed on a bottom of the first operating part (117), and a pin holder (117A) in which the pivot pin (152) of the first shutter (150) is inserted is formed a portion of width direction of the first operating space part (117), and
wherein a side or both sides of the second operating part (118) in the moving direction of the transfer object (S)
is formed obliquely to expose the third inner path (141), a third air injecting hole (119B) is formed on the bottom surface of the second operating part (118), and a pin holder (118A) in which the pivot pin (162) of the second shutter (160) is inserted is formed a portion of width direction of the second operating space part (118).

5. A transfer method to selectively transferring a transfer object (S) using a selective transfer device which comprises a transfer part (100) transferring a transfer object (S); a transfer inlet (350) and a serial inlet (400) supplying the transfer object (S) to the transfer part (100); an outlet ejecting the supplied transfer object (S); and an air pressure supplier (200) supplying air to the transfer part (100), wherein the transfer part (100) comprises a transfer part (100) of plate shape having a predetermined thickness; a first moving path (120), a second moving path (130) and an ejecting path (140) formed on a thickness surface of the transfer body (110) along a direction of the transfer object (S) moving; a first shutter (150) and a second shutter (160) formed in the second moving path (130) and the ejecting path (140) to regulate inflow of air and moving of the transfer object (S), wherein the first moving path (120) and the second moving path (130) is disposed apart from each other, gradually closed along the direction of the transfer object (S) moving, and joined each other to form the ejecting path (140), and wherein the transfer inlet (350) is communicated with the first moving path (120), the serial inlet (400) is communicate with the second moving path (130), the transfer object (S) is selectively inserted in the first moving path (120) and the second moving path (130) and ejected through the ejecting path (140) to the outside, comprising:
when the transfer object (S) is inserted through the transfer inlet (350) to the first moving path (120) and ejected through the ejecting path (140), injecting air to the first moving path (120) through the first air pressure supplier (210) of the air pressure supplier (200) which is connected to the first moving path (120) while a first blocking plate (151) and a second blocking plate (161) of the first shutter (150) and the second shutter (160) are in contact with a bottom surface to open the second moving path (130) and the ejecting path (140); and after the transfer object (S) was passed the second shutter (160), injecting air through the third air pressure supplier (230) of the air pressure supplier (200) which is connected to the ejecting path (140) to raise the second blocking plate (161) such that the ejecting path (140) toward the first moving path (120) is closed and the opposite direction is opened to transfer the transfer object (S) to the outlet (600),
when the transfer object (S) is inserted through the serial inlet (400) to the second moving path (130) and ejected through the ejecting path (140), contacting the first blocking plate (151) and the second blocking plate (161) of the first shutter (150) and the second shutter (160) with the bottom surface to opened the second moving path (130) and the ejecting path (140); after the transfer object (S) was passed the first shutter (150), injecting air through the second air pressure supplier (220) of the air pressure supplier (200) which is connected to the second moving path (130) to raise the first blocking plate (151) of the first shutter (150) such that the second moving path (130) toward the serial inlet (400) is closed and the opposite direction is opened to transfer the transfer object (S) to the ejecting path (140); and after the transfer object (S) was passed the second shutter (160), injecting air in the ejecting path (140) through the third air pressure supplier (230) of the air pressure supplier (220) which is connected to the ejecting path (140) to raise the second blocking plate (161) of the second shutter (160) such that the ejecting path (140) toward the second moving path (130) of the ejecting path (140) is closed and the opposite direction is opened to transfer the transfer object (S) to the outlet (600) through the ejecting path (140).

6. The method of claim 5, wherein the transfer object (S) is a blood sample,
wherein the transfer part (100) comprises a rear transfer part (100-1) and a front transfer part (100-2) which are arranged in a moving direction of the blood sample,
wherein the serial inlet (400) of the front transfer part (100-2) uses the outlet (600) of the rear transfer part (100-1), and
wherein a blood sample gathered at a blood gathering spot is inserted through the transfer inlet (350) of the front transfer part (100-2) to the transfer part (100).

## Patentansprüche

1. Selektive Übertragungsvorrichtung, umfassend:
ein Übertragungsteil (100), das ein Übertragungsobjekt (S) überträgt;
einen Übertragungseinlass (350) und einen Serieneinlass (400), die das Übertragungsobjekt (S) dem Übertragungsteil (100) zuführen;
einen Auslass, der das zugeführte Übertragungsobjekt (S) auswirft; und
einen Druckluftversorger (200), der das Übertragungsteil (100) mit Luft versorgt,
wobei das Übertragungsteil 100 einen plattenförmigen Übertragungskörper (110) mit einer vorbestimmten Dicke; einen ersten Bewegungspfad (120), einen zweiten Bewegungspfad (130) und einen Auswurfpfad (140), die auf einer Dickenfläche des Übertragungskörpers (110) entlang einer Bewegungsrichtung des Übertragungsobjekts (S) ausgebildet sind; einen ersten Verschluss (150) und einen zweiten Verschluss (160), die in dem zweiten Bewegungspfad (130) und dem Auswurfpfad (140) ausgebildet sind, um das Einströmen von Luft und die Bewegung des Übertragungsobjekts (S) zu regulieren, umfasst,
wobei der erste Bewegungspfad (120) und der zweite Bewegungspfad (130) voneinander getrennt angeordnet sind, sich allmählich entlang der Bewegungsrichtung des Übertragungsobjekts (S) schließen und miteinander verbunden sind, um den Auswurfpfad (140) zu bilden, und
wobei der Übertragungseinlass (350) mit dem ersten Bewegungspfad (120) in Verbindung steht, der serielle Einlass (400) mit dem zweiten Bewegungspfad (130) in Verbindung steht, das Übertragungsobjekt (S) selektiv in den ersten Bewegungspfad (120) und den zweiten Bewegungspfad (130) eingeführt und durch den Auswurfpfad (140) nach außen ausgeworfen wird,
wobei die Luftdruckversorgungseinrichtung (200) einen ersten Luftdruckversorger (210), der Luft in den ersten Bewegungspfad (120) einbläst, einen zweiten Luftdruckversorger (220), der Luft in den zweiten Bewegungspfad (130) einbläst, und einen dritten Luftdruckversorger (230), der Luft in den Auswurfpfad (140) einbläst, umfasst,
wobei der zweite Luftdruckversorger (220) an einer stromabwärts gelegenen Seite der Richtung des sich vom ersten Verschluss (150), der in der zweiten Bewegungsbahn (130) angeordnet ist, bewegenden Übertragungsobjekts (S) installiert ist,
wobei der dritte Luftdruckversorger (230) auf einer Seite installiert ist, die in Richtung des sich von der zweiten Klappe (160), die in dem Auswurfpfad (140) angeordnet ist, bewegenden Übertragungsobjekts (S) stromabwärts liegt,
wobei ein drittes Lufteinblasloch (119B) und ein zweites Lufteinblasloch (119A) an der Bodenfläche des Übertragungskörpers (110) ausgebildet sind, um jeweils mit dem dritten Luftdruckversorger (230) und dem zweiten Luftdruckversorger (220) verbunden zu sein und jeweils mit dem Auswurfpfad (140) und dem zweiten Bewegungspfad (130) in Verbindung zu stehen,
wobei die zweite Sperrplatte (161) des zweiten Verschlusses (160) schräg in der Bewegungsrichtung des Übertragungsobjekts (S) auf dem dritten Lufteinblasloch (119B) angeordnet ist, um durch die aus dem dritten Lufteinblasloch (119B) eingeblasene Luft gedreht zu werden, so dass der Auswurfpfad (140) geöffnet oder geschlossen wird, und
wobei die erste Sperrplatte (151) des ersten Verschlusses (150) schräg in der Bewegungsrichtung des Übertragungsobjekts (S) an dem zweiten Lufteinblasloch (119A) angeordnet ist, um durch die aus dem zweiten Lufteinblasloch (119A) eingeblasene Luft gedreht zu werden, so dass der zweite Bewegungsweg (130) geöffnet oder geschlossen wird.

2. Selektive Übertragungsvorrichtung nach Anspruch 1, wobei der erste Verschluss (150) eine erste plattenförmige Sperrplatte (151), die mit der in dem zweiten Bewegungspfad (130) strömenden Luft in Kontakt steht, und einen Drehzapfen (152) umfasst, der an einem unteren Abschnitt der ersten Sperrplatte (151) angeordnet und in einer Seite des zweiten Bewegungspfades (130) installiert ist, und
wobei der zweite Verschluss (160) eine zweite Sperrplatte (161), die in dem Auswurfpfad (140) installiert ist und eine Plattenform aufweist, die mit der in dem Auswurfpfad (140) strömenden Luft in Kontakt steht, und einen Drehzapfen (162) umfasst, der an einem unteren Abschnitt der zweiten Sperrplatte (161) angeordnet und in einer Seite des Auswurfpfades (140) installiert ist, um gedreht zu werden.

3. Selektive Übertragungsvorrichtung nach Anspruch 1, wobei ein erstes Einführungsloch (112) und ein zweites Einführungsloch (113) an einer Seite einer dicken Oberfläche des Übertragungskörpers (110) ausgebildet sind, um mit dem ersten Bewegungspfad (120) und dem zweiten Bewegungspfad (130) in Verbindung zu stehen,
wobei ein Auswurfloch (115) auf der anderen Seite der dicken Oberfläche des Übertragungskörpers (110) ausgebildet ist, um mit dem Auswurfpfad (140) in Verbindung zu stehen,
wobei ein erster offener Abschnitt (111) auf einer Seite der breiten Oberfläche des Übertragungskörpers (110) ausgebildet ist, um einen Abschnitt des ersten Bewegungspfades (120), eines zweiten Bewegungspfades (130) und des Auswurfpfades (140) freizulegen, und ein Abdeckabschnitt (114) um den ersten offenen Abschnitt (111) herum ausgebildet ist, um den ersten Bewegungspfad (120), den zweiten Bewegungspfad (130) und den Auswurfpfad (140) abzudecken, und
wobei eine Abdeckung (180) an dem Übertragungskörper (110) angebracht ist, um die breite Oberfläche des Übertragungskörpers (110) abzudecken.

4. Selektive Übertragungsvorrichtung nach Anspruch 3, wobei der erste Bewegungspfad (120) den ersten offenen Pfad (122), der durch den ersten offenen Abschnitt (111) des Übertragungskörpers (110) freigelegt ist, und einen ersten inneren Pfad (121) umfasst, der durch den Abdeckungsabschnitt (114) des Übertragungskörpers (110) abgedeckt ist und das erste Einführungsloch (112) des Übertragungskörpers (110) und den ersten offenen Pfad (122) verbindet,
wobei der zweite Bewegungsweg (130) einen zweiten offenen Pfad (132), der durch den ersten offenen Abschnitt (111) des Übertragungskörpers (110) freigelegt ist, und einen zweiten inneren Pfad (131) umfasst, der durch den Abdeckabschnitt (114) des Übertragungskörpers (110) und das zweite Einführloch (113) des Übertragungskörpers (110) abgedeckt ist und den zweiten offenen Pfad (132) verbindet,
wobei der Auswurfpfad (140) den dritten offenen Pfad (142), der durch den ersten offenen Abschnitt (111) des Übertragungskörpers (110) freigelegt ist, und einen dritten inneren Pfad (141) umfasst, der durch den Abdeckabschnitt (114) des Übertragungskörpers (110) abgedeckt ist und das Auswurfloch (115) des Übertragungskörpers (110) und den dritten offenen Pfad (142) verbindet,
wobei ein Abschnitt des zweiten inneren Pfades (131) des zweiten Bewegungspfades (130) in einem freien Raum ausgebildet ist, um ein erstes Betriebsraumteil (117) zu bilden, in dem ein erster Verschluss (150) installiert ist, wobei das erste Betriebsraumteil (117) zur Außenseite des Übertragungskörpers (110) freigelegt ist, wobei ein Abschnitt des dritten inneren Pfades (141) des Auswurfpfades (140) in einem freien Raum ausgebildet ist, um einen zweiten Betriebsraumteil (118) zu bilden, in dem ein erster Verschluss (160) installiert ist, wobei der zweite Betriebsraumteil (118) zur Außenseite des Übertragungskörpers hin freiliegt,
wobei eine Seite oder beide Seiten des ersten Betätigungsteils (117) in der Bewegungsrichtung des Übertragungsobjekts (S) schräg ausgebildet sind, um den zweiten inneren Pfad (131) freizulegen, ein zweites Lufteinblasloch (119A) an einem Boden des ersten Betätigungsteils (117) ausgebildet ist, und ein Stifthalter (117A), in den der Schwenkstift (152) des ersten Verschlusses (150) eingesetzt ist, in einem Abschnitt der Breitenrichtung des ersten Betätigungsraumteils (117) ausgebildet ist, und
wobei eine Seite oder beide Seiten des zweiten Betätigungsteils (118) in der Bewegungsrichtung des Übertragungsobjekts (S) schräg ausgebildet ist, um den dritten inneren Pfad (141) freizulegen, ein drittes Lufteinblasloch (119B) an der Bodenfläche des zweiten Betätigungsteils (118) ausgebildet ist und ein Stifthalter (118A), in den der Schwenkstift (162) des zweiten Verschlusses (160) eingesetzt ist, in einem Abschnitt der Breitenrichtung des zweiten Betätigungsraumteils (118) ausgebildet ist.

5. Übertragungsverfahren zum selektiven Übertragen eines Übertragungsobjekts (S) unter Verwendung einer selektiven Übertragungsvorrichtung, die ein Übertragungsteil (100), das ein Übertragungsobjekt (S) überträgt; einen Übertragungseinlass (350) und einen Serieneinlass (400), die das Übertragungsobjekt (S) dem Übertragungsteil (100) versorgen; einen Auslass, der das zugeführte Übertragungsobjekt (S) auswurft und einen Luftdruckversorger (200), der dem Übertragungsteil (100) Luft versorgt, umfasst, wobei das Übertragungsteil (100) ein plattenförmiges Übertragungsteil (100) mit einer vorbestimmten Dicke, einen ersten Bewegungspfad (120), einen zweiten Bewegungspfad (130) und einen Auswurfpfad (140), die auf einer Dickenfläche des Übertragungskörpers (110) entlang einer Bewegungsrichtung des Übertragungsobjekts (S) ausgebildet sind, einen ersten Verschluss (150) und einen zweiten Verschluss (160), die in dem zweiten Bewegungspfad (130) und dem Auswurfpfad (140) ausgebildet sind, um das Einströmen von Luft und das Bewegen des Übertragungsobjekts (S) zu regulieren, umfasst, wobei der erste Bewegungspfad (120) und der zweite Bewegungspfad (130) getrennt voneinander angeordnet sind, sich allmählich entlang der Bewegungsrichtung des Übertragungsobjekts (S) schließen und miteinander verbunden sind, um den Auswurfpfad (140) zu bilden, und wobei der Übertragungseinlass (350) mit dem ersten Bewegungspfad (120) in Verbindung steht, der Serieneinlass (400) mit dem zweiten Bewegungsweg (130) in Verbindung steht, das Übertragungsobjekt (S) selektiv in den ersten Bewegungspfad (120) und den zweiten Bewegungspfad (130) eingeführt und durch den Auswurfpfad (140) nach außen ausgewurfen wird, umfassend:
wenn das Übertragungsobjekt (S) durch den Übertragungseinlass (350) in den ersten Bewegungspfad (120) eingeführt und durch den Auswurfpfad (140) ausgewurfen wird, Einblasen von Luft in den ersten Bewegungspfad (120) durch die erste Luftdruckversorger (210) des Luftdruckversorgers (200), die mit dem ersten Bewegungspfad (120) verbunden ist, während eine erste Sperrplatte (151) und eine zweite Sperrplatte (161) des ersten Verschlusses (150) und des zweiten Verschlusses (160) in Kontakt mit einer Bodenfläche sind, um den zweiten Bewegungspfad (130) und den Auswurfpfad (140) zu öffnen und nachdem das Übertragungsobjekt (S) den zweiten Verschluss (160) passiert hat, Einblasen von Luft durch den dritten Luftdruckversorger (230) des Luftdruckversorgers (200), der mit dem Auswurfpfad (140) verbunden ist, um die zweite Sperrplatte (161) anzuheben, so dass der Auswurfpfad (140) in Richtung des ersten Bewegungspfades (120) geschlossen ist und die entgegengesetzte Richtung geöffnet wird, um das Übertragungsobjekt (S) zum Auslass (600) zu transportieren,
wenn das Übertragungsobjekt (S) durch den seriellen Einlass (400) in den zweiten Bewegungspfad (130) eingeführt und durch den Auswurfpfad (140) ausgeworfen wird, Berühren der ersten Sperrplatte (151) und der zweiten Sperrplatte (161) des ersten Verschlusses (150) und des zweiten Verschlusses (160) mit der Bodenfläche, um den zweiten Bewegungspfad (130) und den Auswurfpfad (140) zu öffnen; nachdem das Übertragungsobjekt (S) den ersten Verschluss (150) passiert hat, Einblasen von Luft durch den zweiten Luftdruckversorger (220) des Luftdruckversorgers (200), der mit dem zweiten Bewegungspfad (130) verbunden ist, um die erste Sperrplatte (151) des ersten Verschlusses (150) anzuheben, so dass der zweite Bewegungspfad (130) in Richtung des Serieneinlasses (400) geschlossen ist und die entgegengesetzte Richtung geöffnet wird, um das Übertragungsobjekt (S) zum Auswurfpfad (140) zu transportieren; und nachdem das Übertragungsobjekt (S) den zweiten Verschluß (160) passiert hat, Einblasen von Luft in den Auswurfpfad (140) durch die dritte Luftdruckversorger (230) der Luftdruckversorger (220), die mit dem Auswurfpfad (140) verbunden ist, um die zweite Sperrplatte (161) des zweiten Verschlusses (160) anzuheben, so dass der Auswurfpfad (140) in Richtung des zweiten Bewegungspfades (130) des Auswurfpfades (140) geschlossen wird und die entgegengesetzte Richtung geöffnet wird , um den Übertragungsobjekt (S) durch den Auswurfpfad (140) zum Auslass (600) zu übertragen.

6. Verfahren nach Anspruch 5, wobei das Übertragungsobjekt (S) eine Blutprobe ist, wobei das Übertragungsteil (100) einen hinteren Übertragungsteil (100-1) und einen vorderen Übertragungsteil (100-2) umfasst, die in einer Bewegungsrichtung der Blutprobe angeordnet sind,
wobei der Serieneinlass (400) des vorderen Übertragungsteils (100-2) den Auslass (600) des hinteren Übertragungsteils (100-1) verwendet, und
wobei eine an einer Blutsammelstelle gesammelte Blutprobe durch den Übertragungseinlass (350) des vorderen Übertragungsteils (100-2) in das Übertragungsteil (100) eingeführt wird.

## Revendications

1. Dispositif de transfert sélectif, comportant :
un élément de transfert (100) transférant un objet à transférer (S),
une entrée de transfert (350) et une entrée sérielle (400) approvisionnant l'objet à transférer (S) à l'élément de transfert (100) ;
une sortie éjectant l'objet à transférer (S) approvisionné ; et
un dispositif d'alimentation en air comprimé (200) approvisionnant l'élément de transfert (100) en air,
dans lequel l'élément de transfert (100) comporte un corps de transfert (110) de forme plate ayant une épaisseur prédéfinie ; un premier chemin de déplacement (120), un second chemin de déplacement (130) et un chemin d'éjection (140) constitués sur une surface d'épaisseur du corps de transfert (110) selon une direction de l'objet à transférer (S) en déplacement ; un premier obturateur (150) et un deuxième obturateur (160) constitués sur le second chemin de déplacement (130) et le chemin d'éjection (140) pour régler l'afflux d'air et le déplacement de l'objet à transférer (S),
dans lequel le premier chemin de déplacement (120) et le second chemin de déplacement (130) sont disposés de manière espacée l'un par rapport à l'autre, progressivement fermés selon la direction de l'objet à transférer (S) en mouvement et convergent pour constituer le chemin d'éjection (140), et
dans lequel l'entrée de transfert (350) est reliée au premier chemin de déplacement (120), l'entrée sérielle (400) est reliée au second chemin de déplacement (130), l'objet à transférer (S) est introduit soit sur le premier chemin de déplacement (120) soit sur le second chemin de déplacement (130) et éjecté vers l'extérieur en passant par le chemin d'éjection (140),
dans lequel le dispositif d'alimentation en air comprimé (200) comporte un premier dispositif d'alimentation en air comprimé (210) injectant de l'air dans le premier chemin de déplacement (120) en air, un deuxième dispositif d'alimentation en air comprimé (220) injectant de l'air dans le second chemin de déplacement (130), et un troisième dispositif d'alimentation en air comprimé (230) qui alimente le chemin d'éjection (140) en air,
dans lequel le deuxième dispositif d'alimentation en air comprimé (220) est monté d'un côté aval en direction de l'objet à transférer (S) en déplacement du premier obturateur (150) disposé sur le second chemin de déplacement (130),
dans lequel le troisième dispositif d'alimentation en air comprimé (230) est monté du côté aval en direction de l'objet à transférer (S) en déplacement du second obturateur (160) disposé sur le second chemin de déplacement (140),
dans lequel un troisième orifice d'injection d'air (119B) et un deuxième orifice d'injection d'air (119A) sont constitués sur la surface de fond du corps de transfert (110) afin d'être reliés au troisième dispositif d'alimentation en air comprimé (230) respectivement au deuxième dispositif d'alimentation en air comprimé (220) et reliés respectivement au chemin d'éjection (140) et au second chemin de déplacement (130),
dans lequel le second disque de blocage (161) du second obturateur (160) est monté en biais dans la direction de déplacement de l'objet à transférer (S) sur le troisième orifice d'injection d'air (119B) pour être tourné par l'air injecté depuis le troisième orifice d'injection d'air (119B) de manière à ouvrir ou fermer le chemin d'éjection (140), et
dans lequel le premier disque de blocage (151) du second obturateur (150) est monté en biais dans la direction de déplacement de l'objet à transférer (S) sur le deuxième orifice d'injection d'air (119A) pour être tourné par l'air injecté depuis le deuxième orifice d'injection d'air (119A) de manière à ouvrir ou fermer le second chemin de déplacement (130).

2. Dispositif de transfert sélectif selon la revendication 1, dans lequel le premier obturateur (150) comporte un premier disque de blocage (151) de forme plate qui est en contact avec l'air circulant sur le second chemin de déplacement (130), et un pivot (152) disposé dans une portion de fond du premier disque de blocage (151) et monté d'un côté du second chemin de déplacement (130), et
dans lequel le second obturateur (160) comporte un second disque de blocage (151) monté sur le chemin d'éjection (140) et présentant une forme plate, qui est en contact avec l'air circulant sur chemin d'éjection (140), et un pivot (162) disposé dans une portion de fond du second disque de blocage (161) et monté d'un côté du chemin d'éjection (140) à être tourné.

3. Dispositif de transfert sélectif selon la revendication 1, dans lequel un premier orifice d'introduction (112) et un second orifice d'introduction (113) sont constitués sur un côté d'une surface d'épaisseur du corps de transfert (110) pour être reliés au premier chemin de déplacement (120) et au second chemin de déplacement (130),
dans lequel un orifice d'éjection (115) est constitué de l'autre côté de la surface d'épaisseur du corps de transfert (110) pour être relié au chemin d'éjection (140),
dans lequel une première portion ouverte (111) est constituée d'un côté de la surface de largeur du corps de transfert (110) pour exposer une portion du premier chemin de déplacement (120), du second chemin de déplacement (130) et du chemin d'éjection (140), et une portion de recouvrement (114) est aménagée autour de la première portion ouverte (111) pour recouvrir le premier chemin de déplacement (120), le second chemin de déplacement (130) et le chemin d'éjection (140), et
dans lequel une plaque de fermeture (180) est rapporté sur le corps de transfert (110) pour recouvrir la surface de largeur du corps de transfert (110).

4. Dispositif de transfert sélectif selon la revendication 3, dans lequel le premier chemin de déplacement (120) comporte le premier chemin ouvert (122) exposé par la première portion ouverte (111) du corps de transfert (110), et un premier chemin intérieur (121) qui est couvert par la portion de recouvrement (114) du corps de transfert (110) et qui relie le premier orifice d'introduction (112) du corps de transfert (110) au premier chemin ouvert (122),
dans lequel le second chemin de déplacement (130) comporte un deuxième chemin ouvert (132) exposé par la première portion ouverte (111) du corps de transfert (110), et un deuxième chemin intérieur (131) qui est couvert par la portion de recouvrement (114) du corps de transfert (110) et le deuxième orifice d'introduction (113) du corps de transfert (110) et raccorde le deuxième chemin ouvert (132),
dans lequel le chemin d'éjection (140) comporte le troisième chemin ouvert (142) exposé par la première portion ouverte (111) du corps de transfert (110), et un troisième chemin intérieur (141) qui est couvert par la portion de recouvrement (114) du corps de transfert (110) et qui relie l'orifice d'éjection (115) du corps de transfert (110) au troisième chemin ouvert (142),
dans lequel une portion du deuxième chemin intérieur (131) du second chemin de déplacement (130) est constituée dans un espace inoccupé pour constituer un premier élément spatial de manœuvre (117) dans lequel est monté un premier obturateur (150), le premier élément spatial de manœuvre (117) est exposé vers l'extérieur du corps de transfert (110),
dans lequel une portion du troisième chemin intérieur (141) du chemin d'éjection (140) est constitué dans un espace inoccupé pour constituer un second élément spatial de manœuvre (118) dans lequel est monté un premier obturateur (160), le deuxième élément spatial de manœuvre (118) est exposé vers l'extérieur du corps de transfert,
dans lequel un côté ou les deux côtés du premier élément de manœuvre (117) dans la direction de déplacement de l'objet à transférer (S) sont constitués en biais afin d'exposer le second chemin intérieur (131), un deuxième orifice d'injection d'air (119A) est constitué sur un fond du premier élément de manœuvre (117), et un support de pivot (117A) dans lequel est introduit le pivot (152) du premier obturateur (150) est constitué sur une portion de direction de largeur du premier élément spatial de manœuvre (117), et
dans lequel un côté ou les deux côtés du deuxième élément de manœuvre (118) dans la direction de déplacement de l'objet à transférer (S) est/sont constitué/s en biais afin d'exposer le troisième chemin intérieur (141), un troisième orifice d'injection d'air (119B) est constitué sur la surface de fond du deuxième élément de manœuvre (118), et un support d'axe (118A) dans lequel est introduit l'axe pivotant (162) du deuxième obturateur (160) est formé une portion de direction de largeur du deuxième élément spatial de manœuvre (118).

5. Procédé de transfert sélectif pour transférer un objet à transférer (S) à l'aide d'un dispositif de transfert sélectif comportant un élément de transfert (100) qui transfère un objet à transférer (S) ; une entrée de transfert (350) et une entrée sérielle (400) approvisionnant l'objet à transférer (S) à l'élément de transfert (100) ; une sortie d'éjection de l'objet à transférer (S) approvisionné ainsi qu'un dispositif d'alimentation en air comprimé (200) alimentant l'élément de transfert (100) en air, dans lequel l'élément de transfert (100) comporte un élément de transfert (100) de forme plate ayant une épaisseur prédéfinie ; un premier chemin de déplacement (120), un second chemin de déplacement (130) et un chemin d'éjection (140) constitués sur une surface d'épaisseur du corps de transfert (110) selon une direction de l'objet à transférer (S) en déplacement ; un premier obturateur (150) et un deuxième obturateur (160) constitués sur le second chemin de déplacement (130) et le chemin d'éjection (140) pour régler l'afflux d'air et le déplacement de l'objet à transférer (S), dans lequel le premier chemin de déplacement (120) et le second chemin de déplacement (130) sont disposés de manière espacée l'un par rapport à l'autre, progressivement obturés selon la direction de déplacement de l'objet à transférer (S) et convergent pour constituer le chemin d'éjection (140), et dans lequel l'entrée de transfert (350) est reliée au premier chemin de déplacement (120), l'entrée sérielle (400) est reliée au second chemin de déplacement (130), l'objet à transférer (S) est sélectivement introduit dans le premier chemin de déplacement (120) et le second chemin de déplacement (130) et éjecté à travers le chemin d'éjection (140) vers l'extérieur, comportant :
lorsque l'objet à transférer (S) est introduit à travers l'entrée de transfert (350) sur le premier chemin de déplacement (120) et éjecté à travers le chemin d'éjection (140), injectant de l'air sur le premier chemin de déplacement (120) grâce au premier dispositif d'alimentation en air comprimé (210) du dispositif d'alimentation en air comprimé (200) qui est relié au premier chemin de déplacement (120) pendant qu'un premier disque de blocage (151) et un second disque de blocage (161) des premier (150) et second (160) obturateurs sont en contact avec une surface de fond afin d'ouvrir le second chemin de déplacement (130) et le chemin d'éjection (140) ; et après passage de l'élément à transférer (S) par le second obturateur (160), injectant de l'air grâce à un troisième dispositif d'alimentation en air comprimé (230) du dispositif d'alimentation en air comprimé (200) qui est relié au chemin d'éjection (140) afin de relever le second disque de blocage (161) de sorte que le chemin d'éjection (140) vers le premier chemin de déplacement (120) est fermé et que la direction opposite est ouverte pour transférer l'objet à transférer (S) vers la sortie (600),
lorsque l'objet à transférer (S) est introduit par l'entrée sérielle (400) sur le second chemin de déplacement (130) et éjecté par le chemin d'éjection (140), mettant en contact les premier (151) et second (161) disques de blocage des premier (150) et second (160) obturateurs avec la surface de fond afin d'ouvrir le second chemin de déplacement (130) et le chemin d'éjection (140) ; après passage de l'élément à transférer (S) par le premier obturateur (150), injectant de l'air via le deuxième dispositif d'alimentation en air comprimé (220) du dispositif d'alimentation en air comprimé (200) qui est relié au second chemin de déplacement (130) afin de relever le premier disque de blocage (151) du premier obturateur (150) de sorte que le second chemin de déplacement (130) vers l'entrée sérielle (400) est fermé et que la direction opposite est ouverte pour transférer l'objet à transférer (S) vers le chemin d'éjection (140) ; et après passage de l'élément à transférer (S) par le second obturateur (160), injectant de l'air grâce au troisième dispositif d'alimentation en air comprimé (230) du dispositif d'alimentation en air comprimé (220) qui est relié au chemin d'éjection (140) afin de relever le second disque de blocage (161) de sorte que le chemin d'éjection (140) vers le second chemin de déplacement (130) du chemin d'éjection (140) est fermé et que la direction opposite est ouverte pour transférer l'objet à transférer (S) à la sortie (600) par le chemin d'éjection (140).

6. Procédé selon la revendication 5, dans lequel l'objet à transférer (S) est un échantillon de sang,
dans lequel l'élément de transfert (100) comporte un élément de transfert arrière (100-1) et un élément de transfert avant (100-2) disposés dans une direction de déplacement de l'échantillon de sang,
dans lequel l'entrée sérielle (400) de l'élément de transfert avant (100-2) emprunte la sortie (600) de l'élément de transfert arrière (100-1), et
dans lequel un échantillon de sang recueilli à un point de prélèvement de sang est introduit par l'entrée de transfert (350) de l'élément de transfert avant (100-2) vers l'élément de transfert (100).
